# FASCICULE DE BREVET EUROPEEN

(11) **EP 1 581 433 B1**
(45) Date de publication et mention de la délivrance du brevet: **03.08.2011**
(21) Numéro de dépôt: 03778440.2
(22) Date de dépôt: 23.10.2003
(51) Int. Cl.: B65D 1/02

(54) **BAGUE FILETEE POUR BOUTEILLE EN PLASTIQUE**
GEWINDE-RING FÜR KUNSTSTOFFFLASCHE
THREADED NECK FOR PLASTIC BOTTLES

(30) Priorité: 12.11.2002 FR 0214142
(43) Date de publication de la demande: 05.10.2005
(73) Titulaire: COMPAGNIE GERVAIS DANONE, 92300 Levallois Perret (FR)
(72) Inventeur: COLLOUD, Alain, F-74200 Reyvroz (FR); PERNOT, Michel, F-75013 Paris (FR)
(74) Mandataire: Burbaud, Eric
(86) Numéro de dépôt international: PCT/FR2003/003137
(87) Numéro de publication internationale: WO 2004/043794

(56) Documents cités:
- EP-A- 0 869 067
- EP-A- 0 909 711
- JP-A- 62 028 211
- JP-A- 62 028 211
- US-A- 5 778 723
- US-A- 6 105 802

## Description

La présente invention est relative à une préforme pour bouteilles en plastique. Elle concerne plus particulièrement une préforme selon la revendication 1.

On utilise depuis plusieurs années des bagues filetées pour les bouteilles en plastique et notamment les bouteilles destinées à contenir des boissons non gazeuses comme par exemple de l'eau plate. Une bague filetée du type précité est connue du document US 6105802, qui décrit les caractéristiques du préambule de la revendication 1.

Les premières bagues filetées utilisées présentaient un diamètre extérieur, filetage compris, d'environ 28 mm et un diamètre intérieur sensiblement égal à 21,7 mm. Ces bagues, dites bagues 28, présentaient un poids important, supérieur à cinq grammes. Le poids d'une bague est mesuré en coupant la bague au niveau de son extrémité inférieure, c'est-à-dire au niveau la face inférieure de la collerette.

Or, il est particulièrement avantageux de réduire le poids de la bague car non seulement cette réduction permet d'économiser de la matière plastique, mais elle permet aussi de réduire la quantité d'énergie utilisée pour le chauffage et le refroidissement lors de l'injection de la matière plastique ce qui permet de faire des économies substantielles pour des productions en très grande série.

De plus les bagues 28 n'étaient pas totalement satisfaisantes pour l'utilisateur. En effet, lors du versement du liquide on obtient un phénomène d'à-coups, communément appelé « glouglou », qui provoque des éclaboussures.

On a donc mis au point des bagues filetées dont le diamètre intérieur est de 25 mm afin d'obtenir un écoulement régulier. Pour ces bagues on a optimisé l'épaisseur de l'élément tubulaire en la réduisant au mieux à 1,5 mm. De même le diamètre extérieur du filetage à été le limité à 30 mm pour obtenir un poids inférieur malgré l'augmentation du diamètre intérieur.

Ainsi ces bagues, habituellement dénommées 30/25, pèsent entre 3,73 et 4,1 grammes selon leur hauteur totale qui varie de 16,8 mm pour les dernières bagues mises au point et appelées 30/25 basses, jusqu'à 18,5 mm pour les plus anciennes.

Pour les bagues 30/25, on a également mis au point un nouveau filetage qui comporte trois filets dont les départs sont espacés de 120°. Ce filetage facilite le vissage du bouchon sur la ligne d'embouteillage et apporte un grand confort d'utilisation pour le consommateur.

Ces bagues sont désormais très répandues, de nombreux fabricants proposent de manière standard des bouchons, dits 30/25, adaptés pour les bagues 30/25.

Les dernières tentatives pour réduire le poids des bagues filetées ont consisté à réduire les diamètres intérieur et extérieur des bagues 30/25. On a ainsi obtenu des bagues, dites bagues 267, dont le diamètre extérieur incluant le filetage est compris entre 27,2 et 27,5 mm, le diamètre intérieur est sensiblement égal à 21,8 mm et qui pèsent entre 3,2 et 3,8 grammes. Mais comme expliqué précédemment, le diamètre intérieur des bagues 267 est insuffisant pour obtenir un bon confort de versage. De plus, le diamètre intérieur réduit des bagues 267 ne permet pas d'optimiser le dessin des préformes.

Le but de la présente invention est d'obtenir une nouvelle bague de poids réduit tout en conservant les avantages des bagues 30/25 existantes et notamment en conservant un bon confort de versage et une grande facilité de vissage.

Un but supplémentaire de l'invention est d'obtenir une nouvelle bague compatible avec les bouchons 30/25 existants. En effet, la mise au point d'un bouchon, qui est généralement réalisée en polypropylène ou en polyéthylène par un fabricant différent du fabricant de la bouteille, est très onéreuse et longue de part le coût de fabrication des moules et la nécessité de faire des essais de compatibilité entre le bouchon et la bague filetée sur les lignes de production.

Bien entendu, la nouvelle bague doit répondre aux exigences satisfaites par les bagues existantes, parmi lesquelles on peut citer :
- une parfaite étanchéité entre la bague et le bouchon ;
- une résistance mécanique suffisante pour supporter le poids de plusieurs bouteilles empilées ;
- des formes géométriques permettant un démoulage facile même sur des machines d'injection travaillant à cadence élevée ;
- une collerette de dimension suffisante pour permettre le transport de la bouteille, sous forme de préforme ou de bouteille définitive, à l'aide des convoyeurs à air actuellement utilisés ;
- une certaine résistance à la chaleur pour que la bague ne se déforme pas lors du soufflage à chaud du corps de la bouteille.

Une nouvelle bague, qui permet d'obtenir une réduction du poids tout en répondant aux exigences énoncées ci-dessus, est obtenue à partir du thermo-soufflage d'une préforme selon la revendication 1.

Grâce à ces dispositions, on obtient une bague compatible avec les bouchons 30/25 existants, dont le poids est d'environ 3,4 grammes, c'est-à-dire du même ordre que les bagues 267, mais qui n'altère pas le confort de versage.

Il est possible d'obtenir un poids encore inférieur si l'on réduit le diamètre de la bague qui ne sera alors plus compatible avec les bouchons 30/25, et/ou si l'on a recours à l'une et/ou à l'autre des dispositions supplémentaires suivantes dans des formes de réalisations préférées de la bague :
a) la hauteur H3 de la portion intermédiaire est au moins égale à 0,4 fois la hauteur H2 de la portion filetée ;
b) l'épaisseur E1 de la portion supérieure est comprise entre 1,3 et 1,5 millimètre, et de préférence égale à 1,45 millimètre ;
c) la hauteur H2 de la portion filetée est comprise entre 4,4 et 5,1 millimètres et de préférence égale à 4,64 millimètres ;
d) la hauteur H1 de la portion supérieure est comprise entre 1,5 et 2 millimètres et de préférence égale à 1,7 millimètre ;
e) le diamètre intérieure D de l'élément tubulaire est au moins égal à 25 millimètres et de préférence égal à 25,1 millimètres ;
f) le diamètre extérieur D1 de la portion supérieure est sensiblement égal à 28 millimètres et le diamètre extérieur D2 des filets est sensiblement égal à 30 millimètres de manière à être compatible avec les bouchons 30/25 ;
g) le filetage comprend trois filets qui présentent des départs régulièrement espacés de 120° et qui s'étendent sur des secteurs angulaires compris entre 100° et 150° ;
h) le diamètre extérieur D6 de la collerette est supérieur de 4 à 6 millimètres au diamètre extérieur D1 de la première portion ;
i) la hauteur totale H est comprise entre 15,4 et 16,2 millimètres et de préférence égale à 15,8 millimètres ;
j) la bague filetée est une bague d'une préforme de section longitudinale en U et destinée à être soufflée à chaud pour obtenir un corps de bouteille de forme définitive, dans laquelle l'extrémité inférieure de l'élément tubulaire est raccordée à une zone de transition tubulaire s'étendant sur une hauteur H7 entre une première extrémité raccordée à ladite bague et une deuxième extrémité raccordée à ladite préforme, ladite zone de transition comportant une première portion de hauteur H71 et d'épaisseur E71, sensiblement constante et égale à l'épaisseur E5 de la portion inférieure, et une deuxième portion d'épaisseur croissante et de diamètre intérieur décroissant jusqu'à ladite deuxième extrémité qui présente une épaisseur E72 comprise entre 2 et 4 fois l'épaisseur E5 de la portion inférieure, et un diamètre intérieur D72 compris entre 0,6 et 0,9 fois le diamètre intérieur D de l'élément tubulaire ;
k) la hauteur H71 de la première portion de la zone de transition est comprise entre 3 et 6 millimètres et de préférence égale à 4,5 millimètres.

En mettant en oeuvre l'ensemble des dispositions supplémentaires a à k, on obtient une bague compatible avec les bouchons 30/25 dont le poids est de 3 grammes exactement, c'est-à-dire inférieur de 20 % aux bagues 30/25 les plus légères et inférieur aux bagues 267 connues, tout en répondant aux exigences de résistance et d'étanchéité.

D'autres caractéristiques et avantages de l'invention apparaîtront au cours de la description qui va suivre, donnée à titre d'exemple non limitatif, en référence aux dessins annexés dans lesquels :
- la figure 1 est une vue en coupe longitudinale d'une bague filetée selon l'invention ;
- la figure 2 est une vue en coupe partielle d'une préforme de bouteille en plastique comprenant la bague filetée représentée à la figure 1 ;
- la figure 3 est une vue agrandie de la partie de la figure 1 entourée par le cercle III.

Sur les différentes figures, on a conservé les mêmes références pour désigner des éléments identiques ou similaires.

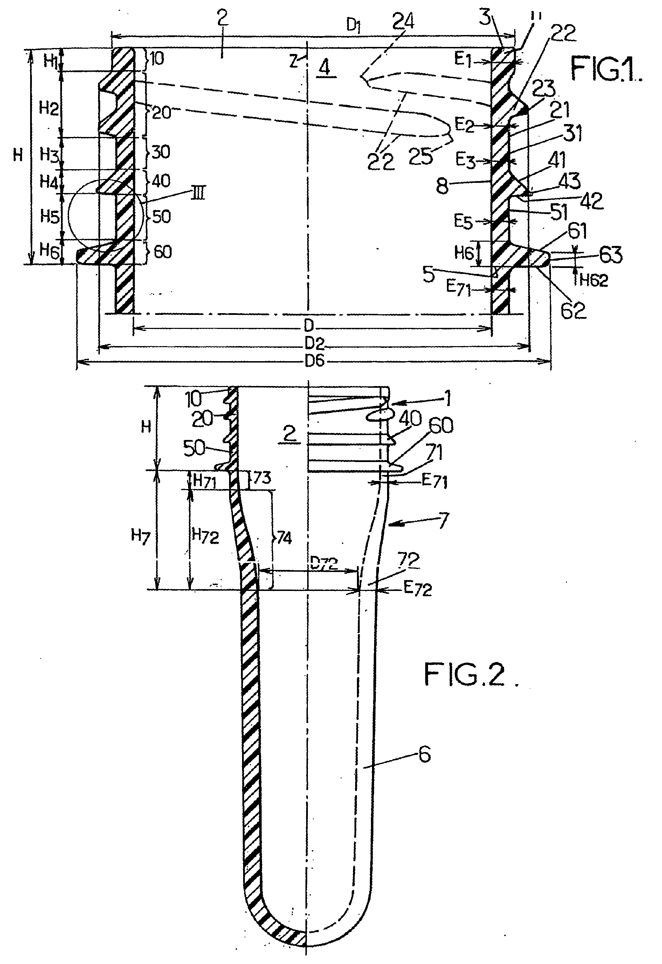

Sur la figure 1 est représenté une bague filetée 1 pour une bouteille en matière plastique, et notamment en PET (polyéthylène téréphtalate), qui est réalisée en une seule pièce avec la bague. La bouteille munie de la bague 1 est tout particulièrement destinée à contenir un liquide comme de l'eau plate ou toutes autres boissons non carbonatées.

La bague 1 comprend un élément tubulaire 2 qui s'étend sur une hauteur totale H mesurée selon un axe longitudinal z. L'élément tubulaire présente une extrémité supérieure 3 qui définit l'ouverture 4 de la bouteille et une extrémité inférieure 5 qui est raccordée au corps de la bouteille.

Le corps de la bouteille, non visible sur la figure 1, peut se présenter sous sa forme définitive, c'est à dire sous forme d'un élément creux, allongé selon l'axe Z et de section transversale circulaire ou plus ou moins polygonale qui peut contenir de 0,1 à 3 litres. Dans ce cas, l'extrémité inférieure 5 de la bague est raccordée au corps par une portion tubulaire de diamètre sensiblement constant dont le début est visible sur la figure 1, puis par une portion évasée appelée épaulement.

Mais le corps de la bouteille peut se présenter aussi sous forme d'une préforme 6 telle que représentée à la figure 2. La préforme qui est réalisée en même temps que la bague, par exemple par injection, possède une section longitudinale en U et est raccordée à la bague par une zone de transition 7 qui sera détaillée ci-après. Pour obtenir la forme définitive de la bouteille, la préforme est soufflée à chaud dans un moule de manière à étirer biaxialement la matière plastique.

L'élément tubulaire 2 présente une paroi interne 8 lisse et cylindrique de diamètre D. Le diamètre D est de préférence supérieur ou égal à 25 mm pour assurer un écoulement régulier lorsque le liquide est versé.

L'élément tubulaire comporte depuis son extrémité supérieure 3 jusqu'à son extrémité inférieure 5 :
- une portion supérieure 10 de hauteur H1 mesurée selon l'axe longitudinal Z ;
- une portion filetée 20 de hauteur H2 ;
- une portion intermédiaire 30 de hauteur H3 ;
- un rebord 40 de hauteur H4 ;
- une portion inférieure 50 de hauteur H5 ; et
- une collerette 60 de hauteur H6.

La somme des hauteurs H1, H2, H3, H4, H5 et H6 est égale à la hauteur totale H de l'élément tubulaire.

Les différentes hauteurs H1, H2, H3, H4, H5 et H6 sont mesurées au point d'intersection du plan transversal des différents éléments saillants avec le plan défini par la paroi extérieure cylindrique de l'élément tubulaire et non pas au point de tangence des rayons de raccordement des différents éléments saillants avec la paroi de l'élément tubulaire.

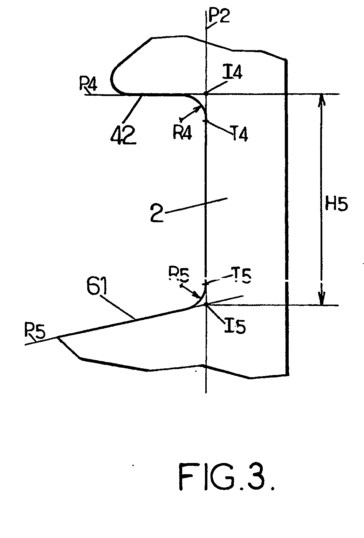

Par exemple et comme cela apparaît plus clairement sur la figure 3, la hauteur H5 de la portion inférieure 50 est mesurée selon l'axe Z entre les points d'intersection 14 et 15. Le point 14 correspond à l'intersection du plan P2, défini par la paroi extérieure de l'élément tubulaire 2, avec le plan P4 défini par la face inférieure 42 du rebord 40. Le point 15 correspond à l'intersection du plan P2 avec le plan P5 défini par la face supérieure 61 de la collerette 60. Les points (T4,T5) correspondent respectivement aux points de tangence des rayons de raccordement (R4,R5) du rebord 40 et de la collerette 60 avec l'élément tubulaire 2.

La portion supérieure 10 possède une épaisseur E1 comprise entre 1,3 mm et 1, 5 mm pour résister au poids de plusieurs bouteilles empilées sans toutefois utiliser une quantité de matière plastique trop importante.

Mais de préférence et comme dans le mode de réalisation représenté, l'épaisseur E1 est égale à 1,45 mm ce qui permet une parfaite étanchéité avec les bouchons standards destinés aux bagues connues de 25,1 mm de diamètre intérieur et de 30mm de diamètre extérieur, appelées bagues 30/25 basses.

La paroi radialement extérieure 11 de la portion supérieure 10 est cylindrique. Avec une valeur de 25,1 mm pour le diamètre intérieur D, le diamètre paroi extérieure 11 présente un diamètre D1 de 28 mm, identique à celui des bagues 30/25, ce qui facilite l'amorce du vissage des bouchons 30/25 standard.

La hauteur H1 est de 1,7 mm dans le mode de réalisation représenté, mais elle peut varier entre 1,5 et 2 mm.

La portion filetée 20 présente une épaisseur E2 inférieure à l'épaisseur E1 pour diminuer le poids de l'élément tubulaire. Dans le mode de réalisation représenté l'épaisseur E2 est égale à 1,21 mm soit 0,83 fois l'épaisseur E1, mais les essais ont montré que l'épaisseur E2 pouvait varier entre 0,75 et 0,9 fois l'épaisseur E1 tout en répondant aux exigences de résistance mécanique de la bague.

La paroi extérieure 21 de la portion 20 est munie d'un filetage saillant dont le sommet 23 des filets 22 atteint un diamètre extérieur D2. Comme pour les bagues 30/25 connues, il s'agit d'un filetage à 3 filets dont les départs 24 sont régulièrement espacés de 120° et dont le profil est asymétrique. Toutefois, la hauteur des filets, mesurée radialement, est légèrement augmentée pour que le diamètre extérieur D2 soit sensiblement égal à 30 mm, ce qui est préférable pour garantir une parfaite tenue des bouchons 30/25.

On notera également que chaque filet 22, depuis son départ 24 jusqu'à son extrémité inférieure 25 ne s'étend que sur un secteur angulaire compris entre 100° et 150°.

La portion intermédiaire 30 présente une paroi extérieure 31 cylindrique dépourvue de relief. L'épaisseur E3 de cette portion intermédiaire est de 1,22 mm, c'est-à-dire approximativement égale à l'épaisseur E2 de la portion filetée 20 et comprise entre 0,75 et 0,9 fois l'épaisseur E1 de la portion supérieure 10.

La hauteur H3 de la portion intermédiaire 30 est de 2,57 millimètres. Cette hauteur H3 et la hauteur H1 sont relativement importantes par rapport à la hauteur H2 de la portion filetée qui est de 4,64 millimètres. Ceci permet de réduire la quantité de matière utilisée pour les filets tout en ayant une somme des hauteurs H1, H2 et H3 suffisante pour recevoir un bouchon 30/25 standard. La hauteur H3 est donc de préférence au moins égale à 0,4 fois la hauteur H2 de la portion filetée 20. Pour obtenir une réduction du poids tout en conservant une bonne retenue du bouchon, la hauteur H2 de la portion filetée est de préférence comprise entre 4,4 mm et 5,1 mm.

Le rebord 40 présente une forme sensiblement triangulaire qui s'étend radialement vers l'extérieur depuis l'élément tubulaire 2. La section triangulaire du rebord 40 comprenant une base de hauteur H4, ici de 1,68 mm, mesurée selon l'axe longitudinal Z, une face supérieure 41 tronconique centrée sur l'axe longitudinal Z et une face inférieure 42 annulaire sensiblement perpendiculaire à l'axe longitudinal.

La face supérieure 41 et la face inférieure 42 forment une arrête 43 plus ou moins arrondie qui présente un diamètre extérieur légèrement supérieur, d'environ 0,3 mm, au diamètre extérieur D2 des filets. L'extrémité inférieur d'un bouchon vissé sur la bague doit arriver au niveau de l'arrête 43.

La face supérieure 41, inclinée de 45° par rapport à l'axe Z, permet le passage d'une bande d'inviolabilité reliée à l'extrémité inférieure du bouchon par des pontets frangibles, tandis que la face inférieure 42 permet de retenir la bande d'inviolabilité une fois mise en place.

La portion inférieure 50 présente également une paroi extérieure 51 cylindrique. La hauteur H5 de cette portion est de 3,6 mm et son épaisseur E5 est égale à l'épaisseur E3 de la portion filetée 20, soit 1,22 mm. Le fait que les épaisseurs E3 et E5 soient très légèrement supérieures à l'épaisseur E2 facilite le démoulage de la bague filetée 1.

La collerette 60 présente une forme sensiblement trapézoïdale qui s'étend radialement vers l'extérieur depuis l'élément tubulaire 2. La section trapézoïdale comprenant une base de hauteur H6 égale à 1,6 mm, une face supérieure 61 annulaire, une face inférieure 62 également annulaire et une extrémité 63 de hauteur H62 mesurée selon l'axe longitudinal Z.

Pour réduire le poids de la collerette, la hauteur H6 de la base doit être inférieure à 1,3 fois l'épaisseur E1 de la portion supérieure. Dans le mode de réalisation représenté, la hauteur H6 est égale à 1,1 fois l'épaisseur E1, mais les calculs montrent que la hauteur H6 pourrait atteindre une valeur d'environ 0,9 fois l'épaisseur E1.

La hauteur H62 de l'extrémité de la collerette est inférieure à celle de la base et, dans le mode de réalisation représenté, elle est égale à 1 mm. Cet amincissement de la collerette est obtenu grâce à une face supérieure 61 qui est inclinée d'un angle compris entre 7° et 15°, tandis que la face inférieure est sensiblement perpendiculaire à l'axe longitudinal Z. La face supérieure 61 forme une butée basse pour la bande d'inviolabilité. La face inférieure 62 sert de surface d'appui pour le transport de la bouteille, notamment dans les convoyeurs à air couramment utilisés pour la fabrication des bouteilles ou pour leur remplissage.

L'extrémité 63 de la collerette atteint un diamètre extérieur D6 de 33 mm. Les essais sur les lignes de production on montrés que ce diamètre qui n'est supérieur que de 5 mm au diamètre extérieur D1 suffisait pour garantir un transport sans incident, alors que l'on préconise généralement pour la collerette un diamètre supérieur de 7 à 10 mm. Or un diamètre D6 supérieur de 4 à 6 mm permet d'économiser du poids et reste compatible avec les convoyeurs à air existants.

La hauteur totale H de la bague filetée, qui peut être comprise entre 15,4 et 16,2 mm est inférieure aux bagues 30/25 existantes et est de préférence égale à 15,8 mm. Cette hauteur permet de gagner du poids tout en étant compatible avec les bouchons 30/25 existant.

Le poids total de la bague ainsi réalisée est de 3 grammes, ce qui est nettement inférieur au poids des bagues 30/25 connues qui est compris en 3,7 et 4,1 grammes, ainsi qu'au poids des bagues 267 qui ont pour désavantage d'avoir un moins bon confort de versage.

La bague de 3 grammes ainsi obtenue a été testée pour vérifier qu'elle répondait bien aux performances de bouchage et de résistance exigées.

Pour les performances de bouchage, les tests ont montré que la bague filetée équipée d'un bouchon 30/25 standard pouvait supporter une pression de 2 000 millibars sans fuite d'air et que le couple de dévissage n'excédait pas 1,2 Nm. Ces valeurs sont parfaitement satisfaisantes puisqu'elles sont égales à celles obtenues avec une bague 30/25 standard.

Pour évaluer les performances de résistance, on conditionne les bouteilles en palettes de 624 unités et on effectue un test, dit d'abus, qui comprend une séquence simulant le transport et une séquence simulant le stockage des palettes empilées. Les tests d'abus effectués avec des bouteilles munies de la bague filetée réalisée selon l'invention ont montré que le nombre de bouteilles endommagées par palette n'excédait pas une unité, ce qui est tout à fait conforme aux résultats obtenus avec des bouteilles équipées de bagues 30/25 standard.

Comme on peut le voir sur la figure 2, la zone de transition 7 est tubulaire et s'étend sur une hauteur H7 entre une première extrémité 71 raccordée à l'extrémité inférieure 5 de l'élément tubulaire et une deuxième extrémité 72 raccordée à la préforme 6.

La zone de transition 7 comporte une première portion 73 de hauteur H71 et d'épaisseur E71 sensiblement constante. L'épaisseur E71 est de préférence de 1,24 mm, c'est-à-dire sensiblement égale à l'épaisseur E5 de la portion inférieure 50 qui mesure 1,22 mm.

Le diamètre intérieur de la première portion 73 est sensiblement constant et égal au diamètre intérieur D de l'élément tubulaire 2. Toutefois, le diamètre de cette première portion peut être légèrement décroissant, de quelques centièmes de millimètres, pour faciliter le démoulage.

La deuxième portion 74 de la zone de transition présente une hauteur H72 d'épaisseur croissante jusqu'à la deuxième extrémité 72 pour laquelle l'épaisseur E72 atteint une valeur de 3 mm, soit environ 2,5 fois l'épaisseur E5 de la portion inférieure 50 de la bague. Toutefois l'épaisseur E72 peut varier entre 2 et 4 fois l'épaisseur E5 selon le taux d'étirement lors du soufflage à chaud et l'épaisseur finale du corps de la bouteille.

Le diamètre intérieur de la deuxième portion est de préférence décroissant jusqu'à la deuxième extrémité 72 qui présente un diamètre intérieur D72 compris entre 0,6 et 0,9 fois le diamètre intérieur D de l'élément tubulaire et de préférence égal à 0,8 fois le diamètre D. Ainsi, le diamètre extérieur de la zone de transition 7 est également décroissant malgré l'augmentation de l'épaisseur ce qui facilite son démoulage.

La première portion 73 de la zone de transition est moins épaisse que celle des zones de transition utilisées à ce jour. La première portion 73 présente l'avantage de nécessiter une moindre quantité de chaleur et de limiter le flux de chaleur transmis à la bague 1 lors du chauffage de la préforme 6 avant le soufflage à chaud. En effet, la bague est plus sensible à la chaleur du fait de son poids inférieur, mais grâce à la zone de transition ainsi réalisée il n'est pas nécessaire d'augmenter le refroidissement de la bague lors du chauffage de la préforme. La bague et la préforme décrites peuvent donc être produites sans modification de la ligne de fabrication.

Pour obtenir une limitation significative du flux de chaleur transmis à la bague, la hauteur H71 de la première portion de la zone de transition doit être comprise entre 3 mm et 6 mm, et elle est de préférence égale à 4,5 mm.

Le mode de réalisation de la bague filetée décrit ci-dessus correspond à la réalisation d'une bague compatible avec les bouchons 30/25 standard. Mais certaines caractéristiques de l'invention peuvent être appliquées à d'autres bagues non compatibles avec les bouchons 30/25, et notamment à des bagues de diamètre inférieur, sans sortir du cadre de la présente invention.

## Revendications

1. Préforme (6) de section longitudinale en U et destinée à être soufflée à chaud pour obtenir un corps de bouteille en plastique de forme définitive, ladite préforme étant raccordée à une bague fileté (1) par une zone de transition (7), ladite bague filetée (1) comprenant un élément tubulaire (2) s'étendant sur une hauteur totale H, mesurée selon un axe longitudinal (Z), entre une extrémité supérieure (3) qui définit l'ouverture (4) de la bouteille et une extrémité inférieure (5) qui est raccordée au corps de la bouteille, et présentant une paroi interne (8) cylindrique de diamètre D, ledit élément tubulaire comportant depuis son extrémité supérieure jusqu'à son extrémité inférieure :
- une portion supérieure (10) de hauteur H1 et d'épaisseur E1 qui présente une paroi radialement extérieure (11) cylindrique de diamètre D1 ;
- une portion filetée (20) de hauteur H2 et d'épaisseur E2 qui présente une paroi extérieure (21) munie d'un filetage (22) saillant dont le sommet (23) des filets atteint un diamètre extérieur D2 ;
- une portion intermédiaire (30) de hauteur H3 et d'épaisseur E3 qui présente une paroi extérieure (31) cylindrique ;
- un rebord (40) présentant une forme sensiblement triangulaire qui s'étend radialement vers l'extérieur depuis l'élément tubulaire, et comprenant une base de hauteur H4 mesurée selon l'axe longitudinal, une face supérieure (41) tronconique centrée sur l'axe longitudinal et une face inférieure (42) annulaire sensiblement perpendiculaire à l'axe longitudinal ;
- une portion inférieure (50) de hauteur H5 et d'épaisseur E5 qui présente une paroi extérieure (51) cylindrique ; et
- une collerette (60) présentant une forme sensiblement trapézoïdale qui s'étend radialement vers l'extérieur depuis l'élément tubulaire, et comprenant une base de hauteur H6, une face supérieure (61) annulaire, une face inférieure (62) également annulaire et une extrémité (63) de hauteur H62 mesurée selon l'axe longitudinal, ladite extrémité atteignant un diamètre extérieur D6,
la somme des hauteurs H1, H2, H3, H4, H5 et H6 étant égale à la hauteur totale H de l'élément tubulaire,
**caractérisée en ce que** l'épaisseur E2 de la portion filetée (20), l'épaisseur E3 de la portion intermédiaire (30) et l'épaisseur E5 de la portion inférieure (50) sont sensiblement égales entre elles et comprises entre 0,75 et 0,9 fois l'épaisseur E1 de la portion supérieure (10),
**en ce que** la hauteur H6 de la base de la collerette (60) est comprise entre 0,9 et 1,3 fois l'épaisseur E1 de la portion supérieure,
**en ce que** l'extrémité inférieure (5) de l'élément tubulaire (2) est raccordée à la zone de transition tubulaire (7) s'étendant sur une hauteur H7 entre une première extrémité (71) raccordée à ladite bague et une deuxième extrémité (72) raccordée à ladite préforme, ladite zone de transition comportant :
- une première portion (73) de hauteur H71 comprise entre 3 et 6 millimètres, et d'épaisseur E71 sensiblement constante et égale à l'épaisseur E5 de la portion inférieure (50), ainsi qu'
- une deuxième portion (74) d'épaisseur croissante vers ladite préforme,
et **en ce que** l'épaisseur E1 de la portion supérieure (10) est comprise entre 1,3 et 1,5 millimètre, et de préférence égale à 1,45 millimètre.

2. Préforme selon la revendication 1, dans laquelle la hauteur H3 de la portion intermédiaire (30) est au moins égale à 0,4 fois la hauteur H2 de la portion filetée (20).

3. Préforme selon l'une des revendications 1 ou 2, dans laquelle la hauteur H2 de la portion filetée (20) est comprise entre 4,4 et 5,1 millimètres et de préférence égale à 4,64 millimètres.

4. Préforme selon l'une quelconque des revendications 1 à 3, dans laquelle la hauteur H1 de la portion supérieure (10) est comprise entre 1,5 et 2 millimètres et de préférence égale à 1,7 millimètre.

5. Préforme selon l'une quelconque des revendications 1 à 4, dans laquelle le diamètre intérieur D de l'élément tubulaire (2) est au moins égal à 25 millimètres et de préférence égal à 25,1 millimètres.

6. Préforme selon l'une quelconque des revendications 1 à 5, dans laquelle le diamètre extérieur D1 de la portion supérieure (10) est sensiblement égal à 28 millimètres et le diamètre extérieur D2 des filets (22) est sensiblement égal à 30 millimètres.

7. Préforme selon l'une quelconque des revendications 1 à 6, dans laquelle le filetage comprend trois filets (22) qui présentent des départs régulièrement espacés de 120° et qui s'étendent sur des secteurs angulaires compris entre 100° et 150°.

8. Préforme selon l'une quelconque des revendications 1 à 7, dans laquelle le diamètre extérieur D6 de la collerette (60) est supérieur de 4 à 6 millimètres au diamètre extérieur D1 de la première portion (10).

9. Préforme selon l'une quelconque des revendications 1 à 8, dans laquelle la hauteur totale H de l'élément tubulaire (2) est comprise entre 15,4 et 16,2 millimètres et de préférence égale à 15,8 millimètres.

10. Préforme selon l'une quelconque des revendications 1 à 9, dans laquelle la deuxième portion (74) d'épaisseur croissante a un diamètre intérieur décroissant jusqu'à ladite deuxième extrémité qui présente une épaisseur E72 comprise entre 2 et 4 fois l'épaisseur E5 de la portion inférieure, et un diamètre intérieur D72 compris entre 0,6 et 0,9 fois le diamètre intérieur D dudit élément tubulaire.

11. Préforme selon l'une quelconque des revendications précédentes, dans laquelle la hauteur H71 de la première portion (73) de la zone de transition (7) est égale à 4,5 millimètres.

## Claims

1. Preform (6) of U-shaped longitudinal section and intended to be hot-blown to obtain a bottle body of definitive shape, said preform being connected to a threaded neck (1) by a transition zone (7), said threaded neck (1) comprising a tubular element (2) extending over a total height H, measured along a longitudinal axis (Z), between an upper end (3) which defines the opening (4) of the bottle and a lower end (5) which is connected to the body of the bottle, and having a cylindrical internal wall (8) of diameter D, said tubular element comprising, from its upper end to its lower end:
- an upper portion (10) of height H1 and of thickness E1 which has a cylindrical radially outer wall (11) of diameter D1;
- a threaded portion (20) of height H2 and of thickness E2 which has an outer wall (21) provided with a projecting screw thread (22) the crests (23) of the flights of which attain an outside diameter D2;
- an intermediate portion (30) of height H3 and of thickness E3 which has a cylindrical outer wall (31);
- a ledge (40) having a more or less triangular shape extending radially outwards from the tubular element and comprising a base of height H4 measured along the longitudinal axis, a frustoconical upper face (41) centered on the longitudinal axis and an annular lower face (42) substantially perpendicular to the longitudinal axis;
- a lower portion (50) of height H5 and of thickness E5 which has a cylindrical outer wall (51); and
- a flange (60) having a more or less trapezoidal shape extending radially outwards from the tubular element and comprising a base of height H6, an annular upper face (61), a lower face (62) that is also annular and an end (63) of height H62 measured along the longitudinal axis, said end attaining an outside diameter D6,
the sum of the heights H1, H2, H3, H4, H5 and H6 being equal to the total height H of the tubular element, **characterized in that** the thickness E2 of the threaded portion (20), the thickness E3 of the intermediate portion (30) and the thickness E5 of the lower portion (50) are more or less equal to one another and lie between 0.75 and 0.9 times the thickness E1 of the upper portion (10),
**in that** the height H6 of the base of the flange (60) is between 0.9 and 1.3 times the thickness E1 of the upper portion,
**in that** the lower end (5) of the tubular element (2) is connected to the tubular transition zone (7) extending over a height H7 between a first end (71) connected to said neck and a second end (72) connected to said preform, said transition zone comprising:
- a first portion (73) of height H71 and thickness E71, more or less constant and equal to the thickness E5 of the lower portion (50), and
- a second portion (74) of increasing thickness towards the preform,
and **in that** the thickness E1 of the upper portion (10) is between 1.3 and 1.5 millimeters, and preferably equal to 1.45 millimeters.

2. Preform according to claim 1, wherein the height H3 of the intermediate portion (30) is at least equal to 0.4 times the height H2 of the threaded portion (20).

3. Preform according to claim 1 or 2, wherein the height H2 of the threaded portion (20) is between 4.4 and 5.1 millimeters and is preferably equal to 4.64 millimeters.

4. Preform of any one of claims 1 to 3, wherein the height H4 of the upper portion (10) is between 1.5 and 2 millimeters and preferably equal to 1.7 millimeters.

5. Preform of any one of claims 1 to 4, wherein the inside diameter D of the tubular element (2) is at least equal to 25 millimeters and preferably equal to 25.1 millimeters.

6. Preform of any one of claims 1 to 5, wherein the outside diameter D1 of the upper portion (10) is more or less equal to 28 millimeters and the outside diameter D2 of the flights (22) is more or less equal to 30 millimeters.

7. Preform of any one of claims 1 to 6, wherein the screw thread comprises three flights (22) which have starts uniformly spaced 120° apart and which extend over angular sectors of between 100° and 150°.

8. Preform of any one of claims 1 to 7, wherein the outside diameter D6 of the flange (60) is 4 to 6 millimeters greater than the outside diameter D1 of the first portion (10).

9. Preform of any one of claims 1 to 8, wherein the total height H of the tubular element (2) is between 15.4 and 16.2 millimeters and preferably equal to 15.8 millimeters.

10. Preform of any one of claims 1 to 9, wherein the second portion (74) of increasing thickness has an inside diameter that decreases as far as said second end which has a thickness E72 of between 2 and 4 times the thickness E5 of the lower portion and an inside diameter D72 of between 0.6 and 0.9 times the inside diameter D of said tubular element.

11. Preform of any one of the preceding claims, wherein the height H71 of the first portion (73) of the transition zone (7) is equal to 4.5 millimeters.

## Patentansprüche

1. Vorform (6) mit U-förmigem Längsschnitt, die dazu bestimmt ist, warm geblasen zu werden, um einen Körper einer Kunststoffflasche mit endgültiger Form zu erhalten, wobei die Vorform an einen Gewindering (1) in einer Übergangszone (7) angeschlossen ist, wobei der Gewindering (1) ein röhrenförmiges Element (2) umfasst, das sich auf einer Gesamthöhe H erstreckt, die entlang einer Längsachse (Z) zwischen einem oberen Ende (3), das die Öffnung (4) der Flasche definiert, und einem unteren Ende (5), das an den Körper der Flasche angeschlossen ist, gemessen wird, umfassend eine zylindrische Innenwand (8) mit einem Durchmesser D, wobei das röhrenförmige Element von seinem oberen Ende bis zu seinem unteren Ende Folgendes umfasst:
- einen oberen Abschnitt (10) mit der Höhe H1 und der Dicke E1, der eine zylindrische radiale Außenwand (11) mit dem Durchmesser D1 aufweist;
- einen Gewindeabschnitt (20) mit der Höhe H2 und der Dicke E2, der eine Außenwand (21) aufweist, die mit einem überragenden Gewinde (22) versehen ist, dessen Spitze (23) der Windungen einen Außendurchmesser D2 erreicht;
- einen Zwischenabschnitt (30) mit der Höhe H3 und der Dicke E3, der eine zylindrische Außenwand (31) aufweist;
- einen Rand (40), der eine im Wesentlichen dreieckige Form aufweist, die sich radial nach außen vom röhrenförmigen Element aus erstreckt, und umfassend eine Basis mit der Höhe H4, die entlang der Längsachse gemessen wird, eine kegelstumpfartige Oberseite (41), die auf die Längsachse zentriert ist, und eine ringförmige Unterseite (42), die im Wesentlichen auf die Längsachse senkrecht steht;
- einen unteren Abschnitt (50) mit der Höhe H5 und der Dicke E5, der eine zylindrische Außenwand aufweist (51); und
- einen Kragen (60), der im Wesentlichen eine Trapezform hat und sich radial nach außen vom röhrenförmigen Element aus erstreckt, und umfassend eine Basis mit der Höhe H6, eine ringförmige Oberseite (61), eine ebenfalls ringförmige Unterseite (62) und ein Ende (63) mit der Höhe H62, gemessen entlang der Längsachse, wobei das Ende einen Außendurchmesser D6 erreicht,
wobei die Summe der Höhen H1, H2, H3, H4, H5 und H6 gleich der Gesamthöhe H des röhrenförmigen Elements ist,
**dadurch gekennzeichnet, dass** die Dicke E2 des Gewindeabschnitts (20), die Dicke E3 des Zwischenabschnitts (30) und die Dicke E5 des unteren Abschnitts (50) im Wesentlichen zueinander gleich sind und zwischen 0,75- und 0,9-mal die Dicke E1 des oberen Abschnitts (10) ausmachen,
dass die Höhe H6 der Basis des Kragens (60) zwischen 0,9- und 1,3-mal die Dicke E1 des oberen Abschnitts ausmacht,
dass das untere Ende (5) des röhrenförmigen Elements (2) an die röhrenförmige Übergangszone (7) angeschlossen ist, die sich auf einer Höhe H7 zwischen einem ersten Ende (71), das an den Ring angeschlossen ist, und einem zweiten Ende (72), das an die Vorform angeschlossen ist, erstreckt, wobei die Übergangszone Folgendes umfasst:
- einen ersten Abschnitt (73) mit der Höhe H71 zwischen 3 und 6 Millimeter und der Dicke E71, die im Wesentlichen konstant und mit der Dicke E5 des unteren Abschnitts (50) gleich ist, sowie
- einen zweiten Abschnitt (74) mit zur Vorform hin zunehmender Dicke,
und dass die Dicke E1 des oberen Abschnitts (10) zwischen 1,3 und 1,5 Millimeter beträgt und vorzugsweise gleich 1,45 Millimeter ist.

2. Vorform nach Anspruch 1, bei der die Höhe H3 des Zwischenabschnitts (30) mindestens gleich 0,4-mal die Höhe H2 des Gewindeabschnitts (20) ist.

3. Vorform nach einem der Ansprüche 1 oder 2, bei der die Höhe H2 des Gewindeabschnitts (20) zwischen 4,4 und 5,1 Millimeter beträgt und vorzugsweise gleich 4,64 Millimeter ist.

4. Vorform nach einem der Ansprüche 1 bis 3, bei der die Höhe H1 des oberen Abschnitts (10) zwischen 1,5 und 2 Millimeter beträgt und vorzugsweise gleich 1,7 Millimeter ist.

5. Vorform nach einem der Ansprüche 1 bis 4, bei der der Innendurchmesser D des röhrenförmigen Elements (2) mindestens gleich 25 Millimeter und vorzugsweise gleich 25,1 Millimeter ist.

6. Vorform nach einem der Ansprüche 1 bis 5, bei der der Außendurchmesser D1 des oberen Abschnitts (10) im Wesentlichen gleich 28 Millimeter und der Außendurchmesser D2 der Gewinde (22) im Wesentlichen gleich 30 Millimeter ist.

7. Vorform nach einem der Ansprüche 1 bis 6, bei der das Gewinde drei Windungen (22) umfasst, die Ausgangspunkte in einem regelmäßigen Abstand von 120° aufweisen und sich auf Winkelsektoren zwischen 100° und 150° erstrecken.

8. Vorform nach einem der Ansprüche 1 bis 7, bei der der Außendurchmesser D6 des Kragens (60) um 4 bis 6 Millimeter größer als der Außendurchmesser D1 des ersten Abschnitts (10) ist.

9. Vorform nach einem der Ansprüche 1 bis 8, bei der die Gesamthöhe H des röhrenförmigen Elements (2) zwischen 15,4 und 16,2 Millimeter beträgt und vorzugsweise gleich 15,8 Millimeter ist.

10. Vorform nach einem der Ansprüche 1 bis 9, bei der der zweite Abschnitt (74) mit zunehmender Dicke einen Innendurchmesser hat, der bis zum zweiten Ende, das eine Dicke E72 zwischen 2- und 4-mal die Dicke E5 des unteren Abschnitts und einen Innendurchmesser D72 zwischen 0,6- und 0,9-mal den Innendurchmesser D des röhrenförmigen Elements aufweist, abnimmt.

11. Vorform nach einem der vorhergehenden Ansprüche, bei der die Höhe H71 des ersten Abschnitts (73) der Übergangszone (7) gleich 4,5 Millimeter ist.
